# EUROPÄISCHE PATENTSCHRIFT

(11) **EP 2 185 916 B1**
(45) Veröffentlichungstag und Bekanntmachung des Hinweises auf die Patenterteilung: **06.11.2013**
(21) Anmeldenummer: 08802360.1
(22) Anmeldetag: 12.09.2008
(51) Int. Cl.: G01N 21/35

(54) **VERFAHREN ZUM ERZEUGEN UND KOHÄRENTEN DETEKTIEREN VON TERAHERTZSTRAHLUNG**
METHOD FOR CREATING AND COHERENTLY DETECTING TERAHERTZ RADIATION
PROCÉDÉ DE GÉNÉRATION ET DE DÉTECTION COHÉRENTE D'UN RAYONNEMENT TÉRAHERTZ

(30) Priorität: 14.09.2007 DE 102007044839
(43) Veröffentlichungstag der Anmeldung: 19.05.2010
(73) Patentinhaber: Fraunhofer-Gesellschaft zur Förderung der angewandten Forschung e.V., 80686 München (DE)
(72) Erfinder: SARTORIUS, Bernd, 14052 Berlin (DE); BACH, Heinz-Gunter, 14163 Berlin (DE); ROEHLE, Helmut, 13629 Berlin (DE)
(74) Vertreter: Pfenning, Meinig & Partner GbR
(86) Internationale Anmeldenummer: PCT/EP2008/007840
(87) Internationale Veröffentlichungsnummer: WO 2009/036984

(56) Entgegenhaltungen:
- M. TONOUCHI: "Cutting-edge terahertz technology" NATURE PHOTONICS, Bd. 1, Februar 2007 (2007-02), Seiten 97-105, XP002509274
- HIROSHI ITO ET AL: "Continuous THz-wave generation using antenna-integrated uni-travelling-carrier photodiodes; Continuous THz-wave generation using antenna-integrated uni-travelling-carrier photodiodes" SEMICONDUCTOR SCIENCE AND TECHNOLOGY, IOP, BRISTOL, GB, Bd. 20, Nr. 7, 1. Juli 2005 (2005-07-01), Seiten S191-S198, XP020086539 ISSN: 0268-1242 in der Anmeldung erwähnt
- WILK R ET AL: "THz time-domain spectrometer based on LT-InGaAs photoconductive antennas exited by a 1.55 [mu]m fibre laser" CLEO '07. 2007 CONFERENCE ON LASERS AND ELECTRO-OPTICS IEEE PISCATAWAY, NJ, USA, 5. Mai 2007 (2007-05-05), - 11. Mai 2007 (2007-05-11) Seiten 1033-1034, XP002509275 ISBN: 978-1-55752-834-6
- DREYHAUPT A ET AL: "High-intensity terahertz radiation from a microstructured large-area photoconductor" APPLIED PHYSICS LETTERS, AIP, AMERICAN INSTITUTE OF PHYSICS, MELVILLE, NY, Bd. 86, Nr. 12, 17. März 2005 (2005-03-17), Seiten 121114-1, XP012064697 ISSN: 0003-6951
- DÖHLER G H ET AL: "THz-photomixer based on quasi-ballistic transport; THz-photomixer based on quasi-ballistic transport" SEMICONDUCTOR SCIENCE AND TECHNOLOGY, IOP, BRISTOL, GB, Bd. 20, Nr. 7, 1. Juli 2005 (2005-07-01), Seiten S178-S190, XP020086538 ISSN: 0268-1242
- MATSUURA S ET AL: "Generation of CW terahertz radiation with photomixing" TERAHERTZ OPTOELECTRONICS (TOPICS IN APPLIED PHYSICS VOL.97) SPRINGER-VERLAG BERLIN, GERMANY, 2005, Seiten 157-202, XP002509276 ISBN: 3-540-20013-4
- JOHN F FEDERICI ET AL: "THz imaging and sensing for security applications-explosives, weapons and drugs; THz imaging and sensing for security applications" SEMICONDUCTOR SCIENCE AND TECHNOLOGY, IOP, BRISTOL, GB, Bd. 20, Nr. 7, 1. Juli 2005 (2005-07-01), Seiten S266-S280, XP020086549 ISSN: 0268-1242
- SUZUKI MASATO ET AL: "Fe-implanted InGaAs photoconductive terahertz detectors triggered by 1.56[mu]m femtosecond optical pulses" APPLIED PHYSICS LETTERS, AIP, AMERICAN INSTITUTE OF PHYSICS, MELVILLE, NY, Bd. 86, Nr. 16, 15. April 2005 (2005-04-15), Seiten 163504-163504, XP012065148 ISSN: 0003-6951
- TANI MASAHIKO ET AL: "Detection of terahertz radiation with low-temperature-grown GaAs-based photoconductive antenna using 1.55 [mu]m probe" APPLIED PHYSICS LETTERS, AIP, AMERICAN INSTITUTE OF PHYSICS, MELVILLE, NY, Bd. 77, Nr. 9, 28. August 2000 (2000-08-28), Seiten 1396-1398, XP012027393 ISSN: 0003-6951
- FURUTA T ET AL: "High-Speed and High-Output InP-InGaAs Unitraveling-Carrier Photodiodes" IEEE JOURNAL OF SELECTED TOPICS IN QUANTUM ELECTRONICS, IEEE SERVICE CENTER, PISCATAWAY, NJ, US, Bd. 10, Nr. 4, 1. Juli 2004 (2004-07-01), Seiten 709-727, XP011120259 ISSN: 1077-260X
- ITO H ET AL: "Photonic generation of continuous THz wave using uni-traveling-carrier photodiode" JOURNAL OF LIGHTWAVE TECHNOLOGY IEEE USA, Bd. 23, Nr. 12, Dezember 2005 (2005-12), Seiten 4016-4021, XP002509277 ISSN: 0733-8724
- SIEGEL P H ET AL: "Antennas for terahertz applications" 2006 IEEE ANTENNAS AND PROPAGATION SOCIETY INTERNATIONAL SYMPOSIUM (IEEE CAT. NO. 06CH37758C) IEEE PISCATAWAY, NJ, USA, 2006, Seiten 2383-2386, XP002509278 ISBN: 1-4244-0123-2
- SARTORIUS: "Terahertz transmitters and receivers" OFC/NFOEC 2008, 24. Februar 2008 (2008-02-24), - 28. Februar 2008 (2008-02-28) Seiten 1691-1693, XP002509279 Piscataway,NJ,USA ISBN: 987-1-55752-586-8
- SARTORIUS ET AL.: "Telecom components for terahertz applications" ECOC 2007, 16. September 2007 (2007-09-16), - 20. September 2007 (2007-09-20) XP002509280 Berlin, Germany ISBN: 978-3-8007-3042-1
- TANI MASAHIKO ET AL: "Detection of terahertz radiation with low-temperature-grown GaAs-based photoconductive antenna using 1.55 [mu]m probe", APPLIED PHYSICS LETTERS, AIP, AMERICAN INSTITUTE OF PHYSICS, MELVILLE, NY, US, vol. 77, no. 9, 28 August 2000 (2000-08-28), pages 1396-1398, XP012027393, ISSN: 0003-6951, DOI: DOI:10.1063/1.1289914
- HIRATA A ET AL: "120-GHz-band millimeter-wave photonic wireless link for 10-Gb/s data transmission", IEEE TRANSACTIONS ON MICROWAVE THEORY AND TECHNIQUES, IEEE SERVICE CENTER, PISCATAWAY, NJ, US, vol. 54, no. 5, 1 May 2006 (2006-05-01), pages 1937-1944, XP001545121, ISSN: 0018-9480, DOI: DOI:10.1109/TMTT.2006.872798

## Beschreibung

Die Erfindung betrifft eine Vorrichtung zum Erzeugen und kohärenten Detektieren von Terahertzstrahlung nach dem Oberbegriff des Hauptanspruchs sowie eine Verwendung einer derartigen Vorrichtung.

Terahertzstrahlung eignet sich zur Materialuntersuchung, weil diese Strahlung einerseits Materialien wie Textilien, Papier oder Kunststoffe ungehindert durchdringt, andererseits aber keine für manche Anwendungen schädliche ionisierende Wirkung hat. Damit bietet sich elektromagnetische Strahlung im Terahertzbereich (THz-Bereich) insbesondere für medizinische Untersuchungen und für Durchleuchtungen bei Sicherheitsuntersuchungen an.

Um von starken THz-Sendern erzeugte Strahlung zu detektieren, sind im Stand der Technik nur Detektoren zur inkohärenten Leistungsmessung, wie beispielsweise Golayzellen, bekannt. Demgegenüber ist eine kohärente Detektion erzeugter Terahertzstrahlung von Vorteil, weil sie mit wesentlich größerer Empfindlichkeit auch kleinste Signale detektieren kann und so genauere Materialuntersuchungen in wesentlich kürzerer Zeit erlaubt. Dazu sind gattungsgemäße Vorrichtungen bekannt, die eine Laserlichtquelle sowie eine mittels der Laserlichtquelle aktivierbare Sendeantenne zum Erzeugen der Terahertzstrahlung und einen Empfänger mit einer durch dieselbe Laserlichtquelle aktivierbaren Empfängerantenne umfassen. Bei derartigen Vorrichtung nach dem Stand der Technik dient eine photoleitende Antenne als Empfängerantenne, wobei die Sendeantenne baugleich zur photoleitenden Empfängerantenne des Empfängers ausgeführt ist, von der sie sich lediglich dadurch unterscheidet, dass an Elektroden der Sendeantenne eine Vorspannung angelegt wird, aufgrund derer bei einem Aktivieren der Sendeantenne mittels der Laserlichtquelle die gewünschte Terahertzstrahlung erzeugt wird. Durch einen derartigen symmetrischen Aufbau wird erreicht, dass die von der Sendeantenne ausgehende Terahertzstrahlung durch die photoleitende Empfängerantenne des Empfängers kohärent detektiert werden kann, wenn diese durch dieselbe Laserlichtquelle aktiviert wird.

M. Tonouchi, "Cutting-edge terahertz technology; Nature Photonics, Volume 1, Februar 2007, Seiten 97-105, beschreibt den Stand der Technik des Oberbegriffs des Anspruchs 1.

Ein Nachteil dieses Standes der Technik ergibt sich dadurch, dass in geschilderter Weise mit Photoleiter-Sendeantennen nur verhältnismäßig schwache Terahertzstrahlung erzeugt werden kann, was einer Anwendung der entsprechenden Vorrichtung für ein Durchleuchten starker Proben und auf große Entfernungen unerwünschte Grenzen setzt.

Der Erfindung liegt also die Aufgabe zugrunde, eine entsprechende Vorrichtung zu entwickeln, die kohärentes Detektieren von Terahertzstrahlung kombiniert mit einer verhältnismäßig leistungsstarken Erzeugung von Terahertzstrahlung und damit universeller einsetzbar ist. Der Erfindung liegt ferner die Aufgabe zugrunde eine Verwendung einer derartigen Vorrichtung zum Untersuchen einer Probe vorzuschlagen.

Diese Aufgabe wird erfindungsgemäß gelöst durch eine Vorrichtung mit den Merkmalen des Hauptanspruchs sowie durch eine Verwendung mit den Merkmalen des Anspruchs 11 Vorteilhafte Ausgestaltungen und Weiterentwicklungen der Erfindung ergeben sich mit den Merkmalen der Unteransprüche.

Dadurch, dass die Sendeantenne bei der hier vorgestellten Erfindung als lichtempfindliches Element eine Photodiode aufweist, dass die Empfängerantenne als photoempfindliches Element einen Photoleiter aufweist und dass beide für ein Laserlicht gleicher Wellenlänge empfindlich sind, kann in vorteilhafter Weise eine vergleichsweise leistungsstarke Terahertzstrahlung erzeugt werden, ohne dass deshalb auf die kohärente Detektion dieser Terahertzstrahlung verzichtet werden müsste.

Die Erfindung wird durch die Einsicht möglich, dass es zum kohärenten Detektieren einer Terahertzstrahlung, die mittels einer durch eine Laserlichtquelle aktivierten Sendeantenne erzeugt wird, wider erwarten nicht notwendig ist, die Sendeantenne und eine Antenne des Empfängers gleichartig auszuführen und damit einen symmetrischen Aufbau zu verwenden. Sendeantennen für eine Erzeugung von Terahertzstrahlung, die als lichtempfindliches Element eine Photodiode aufweisen, sind an sich bekannt. Derartige Antennen eignen sich aber wegen der in Durchgangs- und SperrRichtung sehr unterschiedlichen Strom-Spannungs-Charakteristik nicht zum für kohärenten Empfang nötigen Mischen von Terahertzstrahlung und optischem Signal. Daher hat sich der Stand der Technik darauf beschränkt, eines symmetrischen Aufbaus wegen auch für die Sendeantennen ausschließlich photoleitende Antennen zu verwenden, sofern eine kohärente Detektion vorgesehen war. Um derartige Sendeantennen hinreichend schnell für eine Erzeugung von Terahertzstrahlung zu machen, war man bis lang darauf angewiesen, durch eine große Zahl von Störstellen in einem photoleitenden Element der Sendeantenne für eine sehr schnelle Rekombination lichtinduzierter Ladungsträger zu sorgen, was wiederum eine sehr geringe Effizienz des Photoeffektes und der Licht-Terahertz-Konversion zufolge hatte. Dagegen kann bei der hier für die Sendeantenne vorgeschlagenen Photodiode eine hinreichend hohe Geschwindigkeit durch eine Verwendung entsprechend dünner Schichten problemlos erreicht werden, ohne dass dafür eine geringe Effizienz des Photoeffektes und der Licht-Terahertz-Konversion in Kauf genommen werden muss. Dabei ergibt sich mit der vorliegenden Erfindung ein asymmetrischer Aufbau, bei dem die Sendeantenne mit einer Photodiode als lichtempfindlichem Element ausgeführt wird, während für den kohärenten Empfänger eine photoleitende Antenne zum Einsatz kommt.

Bei typischen Ausführungen der Erfindung wird die Photodiode der Sendeantenne mit mindestens zwei Antennenleitern kontaktiert sein, die beispielsweise als Leiterbahnen auf einem Substrat ausgeführt sein können. Dieses Substrat kann unter Umständen auch als Substrat für die Photodiode dienen. Eine vergleichsweise hohe Strahlungsleistung der erzeugten Terahertzstrahlung lässt sich erreichen, indem die Photodiode in eine Sperrrichtung mit einer Vorspannung beaufschlagt wird. Bei der Photodiode kann es sich beispielsweise um eine UTC-Photodiode (uni-travelling-carrier photodiode) handeln. Derartige Photodioden, die aufgrund einer besonders schnellen Ansteuerbarkeit besonders geeignet sind, sind an sich bekannt, siehe zum Beispiel die Veröffentlichung in Semiconductor Science and Technology, 20 (2005), Seiten S191-S198.

Da die photoleitende Antenne des Empfängers und die Sendeantenne zum Zweck der kohärenten Detektion durch dieselbe Laserlichtquelle aktiviert werden sollen, sind beide so auszuführen, dass die Photodiode und ein lichtempfindlicher Bereich der photoleitenden Empfängerantenne für Licht derselben Wellenlänge lichtempfindlich sind.

Bei bevorzugten Ausführungen der Erfindung entspricht das dem Wellenlängenbereich von 1 µm bis 2 µm, besonders vorzugsweise von 1 µm bis 1,6 µm, in dem von Telekom-Entwicklungen her sehr schnelle Photodioden und eine ausgereifte Technologie zur Verfügung stehen. Die vorhandenen Standard-Photoleiter für Terahertz-Anwendungen dagegen basieren auf GaAs und erfordern zur Ansteuerung eine Wellenlänge kurzwelliger als 850 nm. Daher werden im genannten Fall für den kohärenten Empfänger Photoleiter aus anderen Materialien mit Empfindlichkeit im Spektralbereich 1 µm bis 2 µm benötigt.

Bei vorteilhaften Ausführungen der Erfindung, insbesondere für den Wellenlängenbereich 1 µm bis 1,6 µm, weist die Empfängerantenne einen Photoleiter auf, bei dem mindestens eine photoleitende Schicht zwischen jeweils zwei angrenzenden Halbleitergrenzschichten angeordnet ist, wobei die Halbleitergrenzschichten einen größeren Bandabstand und eine höhere Störstellendichte aufweisen als die mindestens eine photoleitende Schicht. Dabei sollte die Vorrichtung so ausgeführt sein, dass die Laserlichtquelle möglichst ungehindert in die photoleitende Schicht oder die photoleitenden Schichten einstrahlen kann. Durch diesen Aufbau der photoleitenden Empfängerantenne kann in vorteilhafter Weise erreicht werden, dass der Photoleiter einerseits eine hinreichend geringe Dunkelleitfähigkeit aufweist, dabei aber andererseits schnell genug ist, um eine Detektion der Terahertzstrahlung bei einer Aktivierung durch Laserlicht zu ermöglichen, welches auch für eine Erzeugung der Terahertzstrahlung mit einer Photodiode geeignet ist. Letzteres erfordert nämlich eine Verwendung von Lasern mit vergleichsweise großen Wellenlängen (> 1 µm), bei denen man mit der Schwierigkeit konfrontiert ist, dass entsprechende Photoleiter entweder eine zu lange Rekombinationszeit oder eine zu hohe Dunkelleitfähigkeit aufweisen, um sich für photoleitende Antennen zu eignen. Wenn dagegen die photoleitenden Schicht oder jede der photoleitenden Schichten zwischen jeweils zwei angrenzenden Halbleitergrenzschicht beschriebener Art angeordnet ist, kann die hinreichend geringe Dunkelleitfähigkeit erreicht werden, indem in der photoleitenden Schicht oder in den photoleitenden Schichten verhältnismäßig wenige Störstellen (Fehlstellen) vorgesehen werden, während ein hinreichend schnelles Entfernen lichtinduzierter Ladungsträger durch ein Einfangen in den angrenzenden Halbleitergrenzschichten erfolgt. Besonders gute Ergebnisse erzielt man dabei, wenn die mindestens eine photoleitende Schicht eine Schichtdicke von weniger als 30 nm aufweist. Um eine photoleitende Empfängerantenne zu erhalten, die zur kohärenten Detektion von Terahertzstrahlung mit der auf einer Photodiode basierenden Sendeantenne geeignet ist, kann die photoleitende Schicht auf Basis eines InGaAs-oder InGaAsP-Halbleitermaterials gefertigt sein. Dabei bietet sich ein Dotieren der photoleitenden Schicht mit Beryllium an. Die Halbleitergrenzschichten können dagegen aus InAlAs oder einem InAlAs enthaltenden Material gefertigt sein, mit dem sich die gewünschten Eigenschaften realisieren lassen.

Es kann vorgesehen sein, dass die Laserlichtquelle durch jeweils eine Glasfaser mit der Sendeantenne und der photoleitenden Empfängerantenne verbunden ist. Dadurch lässt sich mit einem vergleichsweise einfachen Aufbau erreichen, dass von der Laserlichtquelle erzeugtes Licht sowohl auf die Photodiode als auch auf den lichtempfindlichen Bereich der photoleitenden Empfängerantenne geleitet wird.

Zwischen der Laserlichtquelle und der photoleitenden Empfängerantenne und/oder zwischen der Laserlichtquelle und der Sendeantenne kann eine Einrichtung zum Verändern einer Lichtlaufzeit vorgesehen sein, damit Sendeantenne und photoleitende Antenne des Empfängers so aufeinander abgestimmt werden können, dass die photoleitende Empfängerantenne mit der Sendeantenne so zeitlich korreliert aktiviert wird, dass eine kohärente Detektion möglich wird.

Eine vorteilhafte Verwendung einer Vorrichtung beschriebener Art zum Untersuchen einer Probe mit Terahertzstrahlung sieht vor, dass die Probe zwischen der Sendeantenne und der photoleitenden Empfängerantenne angeordnet wird und die Sendeantenne und die photoleitende Empfängerantenne mit kohärenter Strahlung der Laserlichtquelle aktiviert werden. Mittels einer Einrichtung zum Verändern einer Lichtlaufzeit zwischen der Laserlichtquelle und der photoleitenden Empfängerantenne oder zwischen der Laserlichtquelle und der Sendeantenne kann dann ein Empfangssignal für verschiedene Verzögerungen der Lichtlaufzeit detektiert werden, was ein Scannen eines Signalverlaufs der Terahertzstrahlung erlaubt. Das durch Variation der Lichtlaufzeit im Zeitbereich erhaltene Mischsignal zwischen Terahertz- und Lasersignal kann durch eine Fourier-Transformation in ein Terahertz-Spektrum umgesetzt werden, aus dem wiederum die Terahertz-Eigenschaften einer Probe abgeleitet werden können.

Die Erfindung sieht vor, dass die Laserlichtquelle zwei Laser umfasst, die einander überlagernde Strahlung erzeugen und zur Erzeugung einer optischen Schwebung gegeneinander verstimmt sind. Dabei ergibt sich eine Schwebungsfrequenz, die einer Differenz der Frequenzen der zwei Laser entspricht. Wenn die überlagerte Strahlung der zwei Laser auf die Photodiode gerichtet wird, kann die Sendeantenne eine Terahertzstrahlung mit einer der Schwebungsfrequenz entsprechenden Frequenz erzeugen. Dazu werden die zwei Laser vorzugsweise um eine Frequenzdifferenz von zwischen 0,1 THz und 10 THz gegeneinander verstimmt. Eine bevorzugte Ausgestaltung der Erfindung sieht vor, dass mindestens einer der beiden Laser abstimmbar ist, damit so auch die Schwebungsfrequenz einstellbar wird. Dadurch kann eine Messung, beispielsweise eine Untersuchung einer Probe, in vorteilhafter Weise mit Strahlung verschiedener Frequenzen durchgeführt werden. Ein Abstimmen zumindest eines der Laser kann dabei beispielsweise durch ein Temperieren, also durch Heizen oder Kühlen dieses Lasers, oder durch elektronisches Abstimmen durchgeführt werden.

Es kann vorgesehen sein, dass ein Strahlverzögerungselement mit steuerbarem Brechungsindex in einen Strahlengang der Laserlichtquelle integriert ist. Gegenüber herkömmlichen Einrichtungen zum Verändern einer Lichtlaufzeit, die mechanisch verstellbare Spiegel aufweisen, lässt sich damit eine Verzögerung der Lichtlaufzeit mit einem vorteilhaft stoßunempfindlichen Aufbau erreichen. Das Strahlverzögerungselement kann dabei zum Beispiel als Halbleiter mit einem strom- oder spannungsabhängigen Brechungsindex ausgeführt sein. Das Strahlverzögerungselement mit dem steuerbaren Brechungsindex kann dabei in einen Strahlengang eines der beiden Laser integriert sein. Eine vergleichsweise geringe Verzögerung der von diesem Laser ausgehenden Strahlung um eine Phase der Lichtwelle resultiert dann in einer um ein Vielfaches größeren absoluten Verschiebungsstrecke der THz-Schwebung um ebenfalls eine Phase. Für ein Scannen eines Verlaufs eines Empfangssignals zum Untersuchen einer Probe kann das bereits genügen. Aufwendige mechanische Elemente mit verschiebbaren Spiegeln können so vermieden werden. Selbstverständlich können im Hinblick auf einen möglichst symmetrischen Aufbau der Laserlichtquelle auch zwei entsprechende Strahlverzögerungselemente in den Strahlengang jeweils eines der beiden Laser intergriert werden.

Ausführungsbeispiele der Erfindung werden nachfolgend anhand der Figuren 1 bis 4 beschrieben. Es zeigt
- Fig. 1: eine schematische Darstellung einer Vorrichtung in einer Ausführung der Erfindung,
- Fig. 2: ebenfalls in schematischer Darstellung eine andere Ausführung der Erfindung,
- Fig. 3: eine Aufsicht auf eine photoleitende Empfängerantenne der Vorrichtungen aus den Fign. 1 und 2 und
- Fig. 4: einen Querschnitt durch einen lichtempfindlichen Bereich der photoleitenden Empfängerantenne aus Fig. 3.

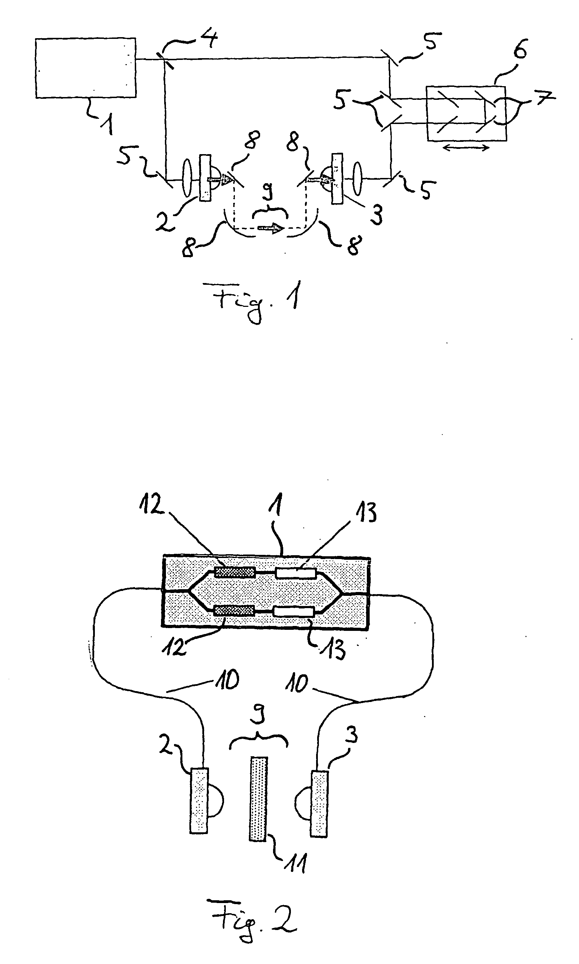

In Fig. 1 ist eine Vorrichtung zum Erzeugen und kohärenten Detektieren von Terahertzstrahlung dargestellt, die eine Laserlichtquelle 1, eine mittels der Laserlichtquelle 1 aktivierbare Sendeantenne 2 zum Erzeugen der Terahertzstrahlung und einen Empfänger mit einer durch dieselbe Laserlichtquelle 1 aktivierbaren photoleitenden Empfängerantenne 3 umfasst. Von der Laserlichtquelle 1 ausgehende Laserstrahlung wird mittels eines Strahlteilers 4 geteilt und mit Hilfe mehrerer Spiegel 5 sowohl auf einen lichtempfindlichen Bereich der photoleitenden Empfängerantenne 3 als auch auf die Sendeantenne 2 geleitet. Dabei ist zwischen der Laserlichtquelle 1 und der photoleitenden Empfängerantenne 3 eine Einrichtung 6 zum Verändern einer Lichtlaufzeit vorgesehen, die zu diesem Zweck bewegliche Spiegel 7 aufweist. Die Laserstrahlung kann jeweils als freier Strahl zwischen der Laserlichtquelle 1, den Spiegeln 5, der Einrichtung 6 und der photoleitenden Empfängerantenne 3 bzw. der Sendeantenne 2 geführt werden, oder aber mit Hilfe von Glasfasern, die wiederum einige oder sämtliche der Spiegel 5 überflüssig machen können.

Die Sendeantenne 2 weist als lichtempfindliches Element eine Photodiode auf, die mit zwei Antennenleitern kontaktiert ist, wobei die Antennenleiter als Leiterbahnen auf einem Substrat ausgeführt sind, welches auch die Photodiode trägt. Bei der Photodiode handelt es sich um eine UTC-Photodiode, die zusammen mit den Antennenleitern eine Terahertz-Sendeantenne der in dem Artikel "Continous THz-wave generation using antenna-integrated uni-travelling-carrier photodiodes" von Hiroshi Ito et al. (s. Semiconductor Science and Technology Vol. 20, Jahrgang 2005, Seiten S191-S198) gezeigten Art bildet. Diese Photodiode ist in eine Sperrrichtung mit einer Vorspannung beaufschlagt, aufgrund derer bei Auftreffen der von der Laserlichtquelle 1 erzeugten Laserstrahlung ein Stromfluss zustande kommt, der wiederum eine von der Sendeantenne 2 ausgehende Terahertzstrahlung verursacht. Die Photodiode arbeitet mit einer Wellenlänge von 1,55 µm, wobei der lichtempfindliche Bereich der photoleitenden Empfängerantenne 3 bei Auftreffen von Licht derselben Wellenlänge leitend wird. Die Laserlichtquelle 1 ist so gewählt, dass die von ihr ausgehende Laserstrahlung eine Wellenlänge von 1,55 µm hat und so zum Aktivieren sowohl der Sendeantenne 2 als auch der photoleitenden Empfängerantenne 3 geeignet ist.

Die photoleitende Empfängerantenne 3 wird weiter unten noch ausführlicher beschrieben. Zwischen der photoleitenden Empfängerantenne 3 und der Sendeantenne 2 sind Reflektoren 8 angeordnet, mit denen die Terahertzstrahlung von der Sendeantenne 2 durch einen Testraum 9 zur photoleitenden Empfängerantenne 3 geleitet wird.

Um eine Probe zu untersuchen, kann diese im Testraum 9 zwischen der Sendeantenne 2 und der photoleitenden Empfängerantenne 3 angeordnet und die Sendeantenne 2 und die photoleitende Empfängerantenne 3 gleichzeitig mit kohärenter Strahlung der Laserlichtquelle 1 aktiviert werden. Durch ein Verschieben der beweglichen Spiegel 7 kann dabei ein Empfangssignal für verschiedene Verzögerungen einer Lichtlaufzeit zwischen der Laserlichtquelle 1 und der photoleitenden Empfängerantenne 3 detektiert und so ein bei der photoleitenden Empfängerantenne 3 ankommendes Terahertz-Signal gescannt werden. Die im Zeitbereich erhaltenen Messgröße wird durch eine Fourier-Transformation in ein Spektrum umgewandelt, und aus diesem kann auf Materialeigenschaften der Probe geschlossen werden.

Selbstverständlich könnte die Einrichtung 6 alternativ auch zwischen dem Strahlteiler 4 und der Sendeantenne 2 angeordnet werden und dementsprechend eine Lichtlaufzeit zwischen der Laserlichtquelle 1 und der Sendeantenne 2 variiert werden.

Die Laserlichtquelle 1 umfasst zwei Laser, die leicht gegeneinander verstimmt sind, wobei von diesen Lasern ausgehende Strahlung zur Erzeugung einer optischen Schwebung überlagert wird. Dabei können die zwei Laser beispielsweise um eine Frequenzdifferenz von zwischen 0,1 THz und 10 THz gegeneinander verstimmt sein, was zur Erzeugung einer kontinuierlichen Terahertzstrahlung entsprechender Frequenz durch die Sendeantenne 2 führt. Zusätzlich kann dann mindestens einer der beiden Laser der Laserlichtquelle 1 abstimmbar ausgeführt sein, damit die Frequenzdifferenz und mit einer dieser Frequenzdifferenz entsprechenden Frequenz der Schwebung auch die Frequenz der erzeugten Terahertzstrahlung variierbar wird.

Eine andere Ausführung einer vergleichbaren Vorrichtung zum Erzeugen und kohärenten Detektieren von Terahertzstrahlung ist in Fig. 2 dargestellt. Wiederkehrenden Merkmale sind dort wieder mit denselben Bezugszeichen versehen. Hier ist die Laserlichtquelle 1 sowohl mit der Sendenantenne 2 als auch mit der photoleitenden Empfängerantenne 3 jeweils durch eine flexible Glasfaser 10 verbunden. Gezeigt ist in Fig. 2 auch beispielhaft eine zwischen die Sendeantenne 2 und die photoleitende Empfängerantenne 3 in den Testraum 9 eingebrachte Probe 11.

Die Sendeantenne 2 und die photoleitende Empfängerantenne 3 sind wie bei dem zuvor beschriebenen Ausführungsbeispiel gestaltet. Die Laserlichtquelle 1 umfasst zwei auf einem gemeinsamen InP-Chip angeordnete DFB-Laser 12, von denen mindestens einer abstimmbar ist, beispielsweise durch ein Temperieren des entsprechenden DFB-Lasers 12. Die Emissionen der beiden DFB-Laser 12 werden zur Erzeugung einer Schwebung überlagert und das überlagerte Signal zu zwei Auskoppelflächen geleitet, wobei an einer dieser Auskoppelflächen austretende Strahlung der Sendeantenne 2 und an der anderen Auskoppelfläche austretende Strahlung der photoleitenden Empfängerantenne 3 zugeführt wird. Zwischen den DFB-Lasern 12 und der photoleitenden Empfängerantenne 3 ist auf dem genannten InP-Chip jeweils ein Strahlverzögerungselement 13 mit steuerbarem Brechungsindex im Strahlengang der beiden DFB-Laser 12 angeordnet. Mit diesen Strahlverzögerungselementen 13 lässt sich eine Lichtlaufzeit zwischen den DFB-Lasern 12 und der photoleitenden Empfängerantenne 3 zumindest geringfügig variieren. Die von den DFB-Lasern 12 ausgehende Strahlung dient für eine beim Überlagern dieser Strahlung erzeugte Schwebung als Trägerwelle. Ein Verzögern der Strahlung eines dieser DFB-Laser 12 um eine Phase der Trägerwelle führt dabei zu einem Verschieben eines erzeugten Schwebungssignals um genau dieselbe Phase, was aber mit der um ein Vielfaches größeren Wellenlänge der Terahertz-Strahlung skaliert. Ein Scannen des bei der photoleitenden Empfängerantenne 3 ankommenden Terahertz-Signals in der an sich schon beschriebenen Weise lässt sich daher bei der vorliegenden Ausführung durch ein vergleichsweise geringfügiges, hochfrequent mit elektrischen Mitteln erreichbares Verzögern der Strahlung eines der beiden DFB-Laser 12 erreichen. Selbstverständlich könnten die Strahlverzögerungselemente 13, die einen strom- oder spannungsabhängigen Brechungsindex aufweisen, stattdessen auch zwischen den DFB-Lasern 12 und der Sendeantenne 2 angeordnet sein.

Durch die Verwendung der Photodiode als lichtempfindliches Element der Sendeantenne 2 kann die zum Untersuchen der Probe 11 erzeugte Terahertzstrahlung mit einer vergleichsweise hohen Strahlungsleistung erzeugt werden, weil die dafür erforderliche hohe Reaktionsgeschwindigkeit der Sendeantenne 2 auf hochfrequent moduliertes Licht durch entsprechend dünne Schichten innerhalb der Photodiode erreicht werden kann. Bei einer im Stand der Technik bekannten Verwendung einer photoleitenden Antenne auch zum Erzeugen der Terahertzstrahlung wäre dagegen eine schnelle Rekombination von lichtinduzierten Ladungsträgern erforderlich, die wiederum eine sehr niedrige Strahlungsleistung zur Folge hätte.

Bei einer Untersuchung der Probe 11 mit der in Fig. 2 gezeigten Vorrichtung kann mit der photoleitenden Empfägnerantenne 3 ein Empfangssignal vorteilhafter Weise für verschiedene relative Phasenlagen der von den DFB-Lasern 12 zum Aktivieren der photoleitenden Empfängerantenne 3 ausgehenden Strahlung detektiert werden, um mittels des damit sich verschiebenden Schwebungssignals das bei der photoleitenden Empfängerantenne 3 ankommende Terahertz-Signal zu scannen.

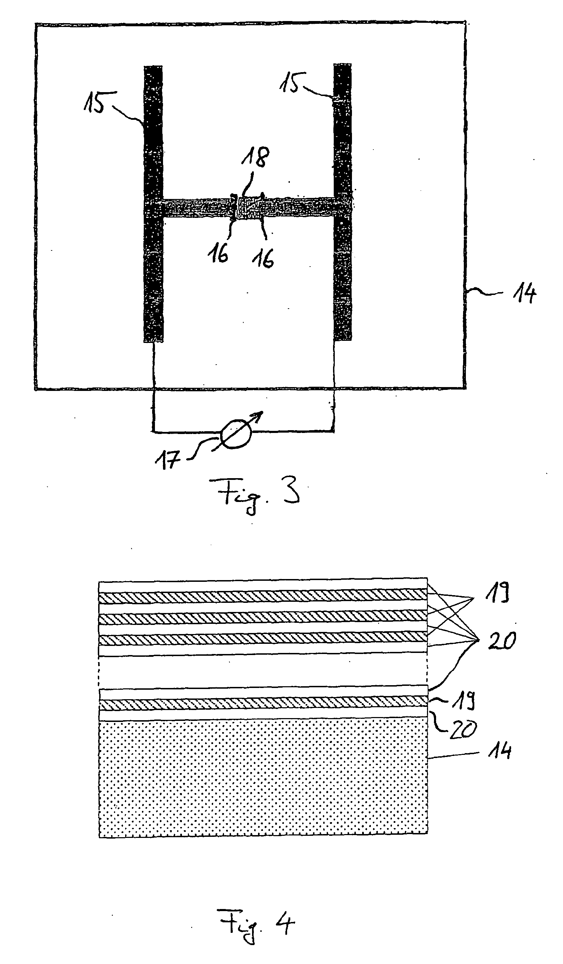

In Fig. 3 ist eine Aufsicht auf die photoleitende Empfängerantenne 3 zu erkennen. Auf einem Träger 14 dieser photoleitenden Empfängerantenne 3 sind zwei Leiterbahnen 15 angeordnet, die als Antennenleiter dienen und mit zwei einander gegenüber liegenden Elektroden 16 verbunden sind. Außerdem sind die Leiterbahnen 15 mit einem Sensor 17 zum Erfassen detektierter Signale kontaktiert. Zumindest in einem lichtempfindlichen Bereich 18 zwischen den Elektroden 16 weist die photoleitende Empfängerantenne 3 eine Schichtstruktur auf, die in Fig. 4 erkennbar ist. Auf dem Substrat 14 sind dort im vorliegenden Beispiel etwa 100 photoleitende Schichten 19 angeordnet, die wiederum jeweils zwischen zwei angrenzenden Halbleitergrenzschichten 20 angeordnet sind. Der Übersichtlichkeit halber sind einige Schichten in der Abbildung ausgelassen. Die photoleitenden Schichten 19 haben jeweils eine Schichtdicke von etwa 12 nm und sind aus einem mit Beryllium dotierten InGaAs-Halbleitermaterial oder InGaAsP-Halbleitermaterial gefertigt. Die Halbleitergrenzschichten 20 dagegen sind aus InAlAs gefertigt und haben eine Schichtdicke von etwa 8 nm. Die Halbleitergrenzschichten 20 sind dabei so ausgeführt, dass sie einen größeren Bandabstand und eine höhere Störstellendichte, also in einer höheren Dichte Fehlstellen, aufweisen als die photoleitenden Schichten 19. In dem lichtempfindlichen Bereich 18 ist so ein Photoleiter realisiert, der sich durch eine sehr geringe Dunkelleitfähigkeit, durch eine hohe Reaktionsgeschwindigkeit und durch eine Lichtempfindlichkeit im Bereich einer Wellenlänge von 1,55 µm auszeichnet. Die Vorrichtungen aus den Fign. 1 und 2 sind jeweils so ausgeführt, dass die Laserlichtquelle 1 in die photoleitenden Schichten 19 dieses Photoleiters einstrahlen.

Bei einem Auftreffen von der Laserstrahlung, die von der Laserlichtquelle 1 ausgeht, auf den lichtempfindlichen Bereich 18 wird diese also leitfähig. Wenn gleichzeitig ein Terahertz-Signal der von der Sende-antenne 2 ausgehenden Terahertztstrahlung bei der photoleitenden Empfängerantenne 3 ankommt, werden in dem lichtempfindlichen Bereich 18 durch die Laserstrahlung erzeugte Ladungsträger in Bewegung versetzt, weshalb wiederum ein entsprechendes elektrisches Signal mit dem Sensor 17 erfasst werden kann. So wird eine kohärente Detektion der mit der Sendeantenne 2 erzeugten Terahertzstrahlung möglich, obwohl die jeweilige Vorrichtung einen asymmetrischen Aufbau mit einer auf einer Photodiode basierten Sendeantenne 2 einerseits und einer photoleitenden Antenne für den Empfänger andererseits zeigt.

Vorgeschlagen wird zusammenfassend also eine Vorrichtung zum Erzeugen und kohärenten Detektieren von Terahertzstrahlung, umfassend eine Laserlichtquelle, eine mittels der Laserlichtquelle aktivierbare Sendeantenne zum Erzeugen der Terahertzstrahlung und einen Empfänger mit einer durch dieselbe Laserlichtquelle aktivierbaren photoleitenden Empfängerantenne, wobei die Sendeantenne als lichtempfindliches Element eine Photodiode aufweist, während die Empfängerantenne in einem lichtempfindlichen Bereich als lichtempfindliches Element einen Photoleiter aufweist, der für ein Laserlicht gleicher Wellenlänge lichtempfindlich ist wie die Photodiode.

## Patentansprüche

1. Vorrichtung zum Erzeugen und kohärenten Detektieren von Terahertzstrahlung, umfassend eine Laserlichtquelle (1), eine Sendeantenne (2), angepasst um durch besagte Laserlichtquelle (1) zum Erzeugen der Terahertzstrahlung aktiviert zu werden, und einen Empfänger mit einer Empfängerantenne (3), wobei die Empfängerantenne (3) angepasst ist um durch dieselbe Laserlichtquelle (1) aktiviert zu werden und wobei die Empfängerantenne (3) als lichtempfindliches Element einen Photoleiter aufweist,
**dadurch gekennzeichnet,**
**dass** die Laserlichtquelle (1) zwei Laser umfasst, die einander überlagernde Strahlung erzeugen und zur Erzeugung einer optischen Schwebung gegeneinander verstimmt sind, wobei die Sendeantenne (2) als lichtempfindliches Element eine Photodiode aufweist, wobei die Photodiode und der Photoleiter in einem gemeinsamen Wellenlängenbereich, der innerhalb eines Wellenlängenintervalls von 1 µm bis 2 µm liegt, photoempfindlich sind und wobei der Photoleiter eine hinreichend geringe Dunkelleitfähigkeit aufweist und schnell genug ist, um eine Detektion der Terahertzstrahlung bei einer Aktivierung durch auch für eine Erzeugung der Terahertzstrahlung mittels der Photodiode geeignetes Laserlicht der Laserlichtquelle (1) zu ermöglichen.

2. Vorrichtung nach Anspruch 1, **dadurch gekennzeichnet, dass** die Photodiode der Sendeantenne (2) mit mindestens zwei Antennenleitern kontaktiert ist.

3. Vorrichtung nach einem der Ansprüche 1 oder 2, **dadurch gekennzeichnet, dass** die Photodiode in eine Sperrichtung mit einer Vorspannung beaufschlagt ist.

4. Vorrichtung nach einem der Ansprüche 1 bis 3, **dadurch gekennzeichnet, dass** die Photodiode eine UTC-Photodiode ist.

5. Vorrichtung nach einem der Ansprüche 1 bis 4, **dadurch gekennzeichnet, dass** der Photoleiter der Empfängerantenne (3) mindestens eine zwischen jeweils zwei angrenzenden Halbleitergrenzschichten (20) angeordnete photoleitende Schicht (19) aufweist, wobei die Halbleitergrenzschichten (20) einen größeren Bandabstand und eine höhere Störstellendichte aufweisen als die mindestens eine photoleitende Schicht (19).

6. Vorrichtung nach einem der Ansprüche 1 bis 5, **dadurch gekennzeichnet, dass** die Laserlichtquelle (1) zur Erzeugung von Strahlung einer Wellenlänge von zwischen 1 µm und 2 µm geeignet ist, wobei die Photodiode und ein durch den Photoleiter gegebener lichtempfindlicher Bereich (18) der Empfängerantenne (3) für Licht dieser Wellenlänge lichtempfindlich sind.

7. Vorrichtung nach einem der Ansprüche 1 bis 6, **dadurch gekennzeichnet, dass** zwischen der Laserlichtquelle (1) und der Empfängerantenne (3) und/oder zwischen der Laserlichtquelle (1) und der Sendeantenne (2) eine Einrichtung (6) zum Verändern einer Lichtlaufzeit vorgesehen ist.

8. Vorrichtung nach einem der Ansprüche 1 bis 7, **dadurch gekennzeichnet, dass** die zwei Laser um zwischen 0,1 THz und 10 THz gegeneinander verstimmt sind.

9. Vorrichtung nach einem der Ansprüche 1 bis 8, **dadurch gekennzeichnet, dass** mindestens einer der beiden Laser abstimmbar ist.

10. Vorrichtung nach einem der Ansprüche 1 bis 9, **dadurch gekennzeichnet, dass** in einen Strahlengang eines der beiden Laser ein Strahlverzögerungselement (13) mit steuerbarem Brechungsindex integriert ist.

11. Verwendung einer Vorrichtung nach einem der Ansprüche 1 bis 10 zum Untersuchen einer Probe (11) mit Terahertzstrahlung, wobei die Probe (11) zwischen der Sendeantenne (2) und der Empfängerantenne (3) angeordnet wird und die Sendeantenne (2) und die Empfängerantenne (3) gleichzeitig mit kohärenter Strahlung der Laserlichtquelle (1) aktiviert werden.

12. Verwendung nach Anspruch 11, **dadurch gekennzeichnet, dass** ein Empfangsignal für verschiedene Verzögerungen einer Lichtlaufzeit zwischen der Laserlichtquelle (1) und der Empfängerantenne (3) oder der Sendeantenne (2) detektiert wird.

## Claims

1. A device for producing and coherently detecting terahertz radiation, comprising a laser light source (1), a transmitter antenna (2) configured for being activated by way of said laser light source (1) for producing the terahertz radiation, and a receiver with a receiver antenna (3), wherein the receiver antenna (3) is configured for being activated by the same laser light source (1) and wherein the receiver antenna (3) as a light-sensitive element comprises a photo-conductor, **characterised in that**
the laser light source (1) comprises two lasers, which produce radiation superimposing on one anther and are off-tuned to one another for producing an optical beat, wherein the transmitter antenna (2) as a light-sensitive element comprises a photo-diode, wherein the photodiode and the photo-conductor are photo-sensitive in a common wavelength region, which lies within a wavelength interval of 1µm to 2 µm, and wherein the photo-conductor has a sufficiently low dark conductivity and is quick enough to permit a detection of the terahertz radiation with an activation by way of laser light of the laser light source (1), which is also suitable for a production of the terahertz radiation with the photo-diode.

2. A device according to claim 1, **characterised in that** the photo-diode of the transmitter antenna (2) may be contacted with a least two antenna conductors.

3. A device according to one of claims 1 or 2, **characterised in that** the photo-diode is subjected to a bias voltage in a blocking direction.

4. A device according to one of claims 1 to 3, **characterised in that** the photo-diode is a UTC photo-diode.

5. A device according to one of claims 1 to 4, **characterised in that** the photo-conductor of the receiver antenna (3) comprises at least one photo-conductive layer arranged (19) in each case between two adjacent semiconductor boundary layers (20), wherein the semiconductor boundary layers (20) have a larger band gap and a higher defect density than the at least one photo-conductive layer (19).

6. A device according to one of claims 1 to 5, **characterised in that** the laser light source (1) is suitable for producing radiation of a wavelength of between 1 µm and 2 µm, wherein the photo-diode and a light-sensitive region (18) of the receiver antenna (3), said region being given by the photo-conductor, are light-sensitive to light of this wavelength.

7. A device according to one of claims 1 to 6, **characterised in that** a device (6) for changing the time-of-flight is provided between the laser light source (1) and the receiver antenna (3) and/or between the laser light source (1) and the transmitter antenna (2).

8. A device according to one of claims 1 to 7, **characterised in that** the two lasers are off-tuned to one another by between 0,1 THz and 10 THz.

9. A device according to one of claims 1 to 8, **characterised in that** at least one of the two lasers is tuneable.

10. A device according to one of claims 1 to 9, **characterised in that** a beam delay element (13) with a controllable refractive index is integrated into a beam path of one of the two lasers.

11. The use of a device according to one of claims 1 to 10, for examining a sample (11) with terahertz radiation, wherein the sample (11) is arranged between the transmitter antenna (2) and the receiver antenna (3), and the transmitter antenna (2) and the receiver antenna (3) are simultaneously activated with coherent radiation of the laser light source (1).

12. The use according to claim 11, **characterised in that** a receiver signal for different delays of a time-of-flight between the laser light source (1) and the receiver antenna (3) or the transmitter antenna (2) is detected.

## Revendications

1. Dispositif pour la production et la détection cohérente du rayonnement térahertz, comprenant une source de lumière laser (1), une antenne d'émission (2), adaptée pour être activée par ladite source de lumière laser (1) pour produire le rayonnement térahertz, et un récepteur avec une antenne de réception (3), dans lequel l'antenne de réception (3) est adaptée pour être activée par la même source de lumière laser (1) et dans lequel l'antenne de réception (3) comporte un photoconducteur en tant qu'élément photosensible,
**caractérisé en ce que**
la source de lumière laser (1) comporte deux lasers produisant des rayonnements superposés, lesquels sont désaccordés pour produire un battement optique, l'antenne d'émission (2) comportant une photodiode en tant qu'élément photosensible, la photodiode et le photoconducteur e'tant photosensibles dans une même plage de longueur d'onde comprise dans un intervalle de longueur d'onde de 1 µm à 2 µm, et le photoconducteur présentant une conductivité d'obscurité suffisamment faible pour permettre une détection du rayonnement térahertz lors d'une activation par une lumière laser de la source de lumière laser (1) également appropriée pour produire le rayonnement térahertz au moyen de la photodiode.

2. Dispositif selon la revendication 1, **caractérisé en ce que** la photodiode de l'antenne d'émission (2) est en contact avec au moins deux conducteur d'antenne.

3. Dispositif selon l'une des revendications 1 ou 2, **caractérisé en ce que** la photodiode est soumise à une précontrainte dans une direction de verrouillage.

4. Dispositif selon l'une des revendications 1 à 3, **caractérisé en ce que** la photodiode est une photodiode UTC.

5. Dispositif selon l'une des revendications 1 à 4, **caractérisé en ce que** le photoconducteur de l'antenne de réception (3) comporte au moins une couche photoconductrice (19) agencée respectivement entre deux couches limites semi-conductrices (20) adjacentes, les couches limites semi-conductrices (20) présentant une plus grande largeur de bande et une plus forte concentration d'impuretés que l'au moins une couche photoconductrice (19).

6. Dispositif selon l'une des revendications 1 à 5, **caractérisé en ce que** la source de lumière laser (1) est adaptée pour produire un rayonnement d'une longueur d'onde entre 1 µm et 2 µm, la photodiode ainsi qu'une région photosensible (18) de l'antenne de réception (3) définie par le photoconducteur e'tant photosensibles à la lumière correspondant à cette longueur d'onde.

7. Dispositif selon l'une des revendications 1 à 6, **caractérisé en ce qu'**un moyen (6) permettant de modifier un temps de propagation de la lumière est prévu entre la source de lumière laser (1) et l'antenne de réception (3) et/ou entre la source de lumière laser (1) et l'antenne d'émission (2).

8. Dispositif selon l'une des revendications 1 à 7, **caractérisé en ce que** les deux lasers sont désaccordés de l'équivalent de 0,1 THz à 10 THz.

9. Dispositif selon l'une des revendications 1 à 8, **caractérisé en ce qu'**au moins l'un des deux lasers peut être accordé.

10. Dispositif selon l'une des revendications 1 à 9, **caractérisé en ce qu'**un élément de retardement du rayonnement (13) avec un indice de réfraction contrôlable est intégré dans une trajectoire des rayons de l'un des deux lasers.

11. Utilisation d'un dispositif selon l'une des revendications 1 à 10, pour l'examen d'un échantillon (11) avec un rayonnement térahertz, dans laquelle l'échantillon (11) est placé entre l'antenne d'émission (2) et l'antenne de réception (3), et l'antenne d'émission (2) et l'antenne de réception (3) sont activées simultanément avec un rayonnement cohérent de la source de lumière laser (1).

12. Utilisation selon la revendication 11, **caractérisée en ce qu'**un signal de réception est détecté pour différents retards dans le temps de propagation de la lumière entre la source de lumière laser (1) et l'antenne de réception (3) ou l'antenne d'émission (2).
